# EUROPÄISCHE PATENTSCHRIFT

(11) **EP 1 735 224 B1**
(45) Veröffentlichungstag und Bekanntmachung des Hinweises auf die Patenterteilung: **05.01.2011**
(21) Anmeldenummer: 05715968.3
(22) Anmeldetag: 10.03.2005
(51) Int. Cl.: B65G 15/44

(54) **VORRICHTUNG ZUM TRANSPORT VON FLACHEN GEGENSTÄNDEN**
DEVICE FOR TRANSPORTING FLAT OBJECTS
DISPOSITIF POUR TRANSPORTER DES OBJETS PLATS

(30) Priorität: 15.03.2004 DE 102004012755
(43) Veröffentlichungstag der Anmeldung: 27.12.2006
(73) Patentinhaber: Windmöller & Hölscher KG, 49525 Lengerich (DE)
(72) Erfinder: KNOKE, Thomas, 33619 Bielefeld (DE); DIECKMANN, Franz-Josef, 49497 Mettingen (DE); LAMKEMEYER, Andreas, 49082 Osnabrück (DE); ULLMANN, Klaus, 26670 Uplengen (DE); HÄGER, Christian, 48488 Emsbüren (DE); TAUSCH, Carsten, 49080 Osnabrück (DE)
(86) Internationale Anmeldenummer: PCT/EP2005/002602
(87) Internationale Veröffentlichungsnummer: WO 2005/092747

(56) Entgegenhaltungen:
- DE-A1- 3 323 638
- DE-A1- 10 011 680
- US-A- 3 908 816

## Beschreibung

Die Erfindung betrifft eine Vorrichtung zum Transport von flachen Gegenständen gemäß dem Oberbegriff des Anspruchs 1.

Derartige Vorrichtungen werden beispielsweise in verschiedenen Verarbeitungsmaschinen eingesetzt, etwa in Maschinen zur Herstellung von Säcken mit angeformten Böden aus Schlauchstücken, die häufig aus einem schlauchförmigen Material gebildet werden. Innerhalb dieser Verarbeitungsmaschinen werden die Säcke oder Schlauchstücke durch die bekannten Transportvorrichtungen zu verschiedenen Bearbeitungsstationen in eine Transportrichtung transportiert, wobei mehrere Bearbeitungsstationen entlang einer einzigen Transportvorrichtung angeordnet sein können. Die flachen Gegenstände werden dabei von einem Fördermittel mitgenommen oder mitgezogen. Um ein zuverlässiges Transportieren der Gegenstände zu gewährleisten, weisen bekannte Vorrichtungen eine dem Fördermittel zugeordnete Gegenlage auf. Zwischen dem Fördermittel und der Gegenlage wirkt eine Klemmkraft, durch welche die flachen Gegenstände in Wirkverbindung mit dem Fördermittel gehalten werden. In einfachster Bauform besteht die Gegenlage ebenfalls aus einem Fördermittel. Beide Fördermittel stehen dabei in Wirkverbindung mit dem Gegenstand, so dass sich der Gegenstand relativ zu beiden Fördermittel in Ruhe befindet und zuverlässig transportiert wird. In Teilbereichen der beschriebenen Verarbeitungsmaschinen ist ein diskontinuierlicher Transport, also ein Takttransport, notwendig, wobei die zu bearbeitenden Gegenstände im Bereich einer Bearbeitungsstation kurzzeitig relativ zu dieser in Ruhe sein müssen und erst nach der Bearbeitung weiter transportiert werden dürfen. Zur ordnungsgemäßen Bearbeitung müssen die Gegenstände zudem in ihrer Ruhestellung relativ zu der Bearbeitungsstation eine definierte Position einnehmen. Somit dürfen die flachen Gegenstände auch innerhalb der Vorrichtung zum Transport nur bestimmte Positionen relativ zum Fördermittel einnehmen.

Nachteilig bei den genannten Vorrichtungen zum Transport von flachen Gegenständen ist allerdings, dass das Erfassen der flachen Gegenstände am einlaufseitigen Ende der Transportvorrichtung nur zu sehr ungenau definierten Zeitpunkten erfolgt. Dies ist insbesondere der Fall, wenn ein Gegenstand von einem kontinuierlichen Transport in eine Vorrichtung zum diskontinuierlichen Transport übergeben werden muss. Damit sind auch die Positionen der flachen Gegenstände relativ zum Fördermittel häufig mit großen Fehlern behaftet und eine fehlerbehaftete Bearbeitung der Gegenstände die Folge.

Die Druckschrift DE 33 23 638 A1 zeigt hingegen eine Vorrichtung zum Transportieren von flächigen Materialteilen, wobei die Wirkverbindung zur Gegenfläche mit Nadeln realisiert ist, die in ein zu transportierendes Materialteil eingestochen werden.
Auch wenn solche Nadeln durch stumpfere Mitnahmeelemente ersetzt werden, die nicht in das Material einstechen, sondern nur eine Klemmkraft ausüben, Könnte es zu Beschädigungen des Materials kommen.

Die Aufgabe der Erfindung ist es daher, eine Vorrichtung zum Transport von flachen Gegenständen vorzuschlagen, die die genannten Beschädigungen vermeidet.

Die Aufgabe wird gelöst durch die kennzeichnenden Merkmale des Anspruchs 1.

Demnach weist das Fördermittel zumindest zwei in Transportrichtung der flachen Gegenstände und in Transportrichtung gegeneinander versetzte Mitnehmerelemente aus, welche zumindest einen Teil der genannten Klemmkraft auf die flachen Gegenstände vermittelt. Damit wird ein flacher Gegenstand, der sich im Einlaufbereich der Vorrichtung befindet, nur dann transportiert, wenn er in Reibschluss mit einem Mitnehmerelement kommt. Dabei ist der Einlaufbereich und die Übergabe des Gegenstandes so ausgestaltet, dass das Mitnehmerelement einen Gegenstand immer an im Wesentlichen gleichen Bereichen erfasst. Jeder zu transportierende Gegenstand nimmt damit eine festgelegte Position relativ zu dem Fördermittel ein. Die Haltemittel bewegen sich dabei wie die Gegenstände in Transportrichtung, brauchen dabei aber micht mit dem Fördermittel verbunden sein. Der Abstand der einzelnen Mitnehmerelemente hängt von der Taktzeit im diskontinuierlichen Transport ab und beträgt mindestens der Ausdehnung der flachen Gegenstände in Transportrichtung, beispielsweise mindestens 400mm.

Die Gegenlage kann sich in gleicher Geschwindigkeit wie das Fördermittel bewegen, kann sich aber langsamer bewegen oder in Ruhe befinden. In beiden letztgenannten Fällen gleiten oder rutschen die Gegenstände an der Gegenlage entlang. Um dieses zur gewährleisten muss das Verhältnis der Haftreibungskraft des Mitnehmerelements zu der Gleitreibungskraft der Gegenlage größer 1 sein. Diese beiden Reibungskräfte hängen von verschiedenen Parametern ab, welche entsprechend den Anforderungen gewählt werden. So kann die Gegenlage beispielsweise aus einem Metall und das Mitnehmerelement an der Oberfläche, welche mit dem Gegenstand in Kontakt steht, mit einem rauen Material beschichtet sein. Jedoch können auch weitere Hilfsmittel benutzt werden, um die Reibungskräfte zu beeinflussen. Die Gegenlage kann mit einem Schmiermittel benetzt sein. Weiterhin kann das Mitnehmerelement eine elektrostatische Ladung aufweisen, so dass der Gegenstand, falls es sich um elektrisch isolierendes Material handelt, elektrostatisch von dem Mitnehmerelement angezogen wird. Die Gegenlage besteht in der Regel aus einem nicht nachgiebigen Material, so dass der Gegenstand von dem Mitnehmerelement immer mit konstanter Kraft und mit gleicher Position gegen die Gegenlage gedrückt wird.

In weiterer Ausgestaltung der Erfindung ist das zumindest eine Fördermittel zumindest ein umlaufendes, endloses Transportmittel wie ein Band, ein Riemen, eine Kette oder ein Rad. Vorteilhaft ist dabei die Verwendung einer Laschenkette. Eine solche Laschenkette kann über Zahnräder angetrieben werden.

In der erfindungsgemäßen Ausführungsform sind zumindest Bestandteile eines jeden Mitnehmerelements zum Vermitteln der Klemmkraft in Richtung auf die Gegenlage verschiebbar. Bei einem Ausbleiben eines flachen Gegenstandes brauchen die Bestandteile des Mitnehmerelementes auch nicht zwecks Klemmung verschoben werden. Diese Maßnahme verhindert übermäßigen Verschleiß der Bestandteile des Mitnehmerlelementes, des Fördermittels und/oder der Gegenlage.

Vorteilhafterweise weist das zumindest eine Fördermittel zumindest zwei Haltestücke auf, in welchen zumindest Bestandteile der Mitnehmerelemente verschieblich gelagert sind. Besonders einfach lassen sich solche Haltestücke seitlich an Laschenketten anbringen. Die Haltestücke können winkelartig ausgebildet sein und Bohrungen aufweisen, so dass stiftartige Bestandteile des Mitnehmerelementes in diesen Bohrungen verschieblich gelagert werden können.

Bevorzugt weist jedes Mitnehmerelement auf der der Gegenlage zugewandten Seite ein kompressibles Material auf, mit welchem die Wirkverbindung der flachen Gegenstände zu dem zumindest einen Fördermittel herstellbar auf. Mit einem solchen kompressiblen Material, beispielsweise Silikonkautschuk oder Gummi. Derartige Materialien erhöhen die Haftreibung zwischen Mitnehmerelement und dem flachen Gegenstand. Dieses kompressible Material kann separat auf jedes Mitnehmerelement aufgebracht sein, jedoch kann auch ein bandförmiges Material eingesetzt werden, was auch die Zwischenräume zwischen den Mitnehmerelementen überspannt und so die Haftreibung noch weiter erhöht. Das kompressible Material kann zudem von Abstandhaltern umgeben sein, die das kompressible Material derart überragen, dass bei Ausbleiben eines flachen Gegenstandes das kompressible Material nicht mit der Gegenlage in Kontakt kommt.

In einer besonders bevorzugten Ausführungsform bringen zwei sich aufgrund einer magnetischen Wechselwirkung anziehenden oder abstoßenden Komponenten Kräfte auf, die zumindest einen Teil der Klemmkräfte ausmachen, die die Mitnehmerelemente den flachen Gegenständen vermitteln.
Dabei ist die erste Komponente in oder an der Gegenlage und die zweite Komponente in oder an dem Mitnehmerelement angeordnet. Durch diese Maßnahme können Fördermittel und Mitnehmerelement mechanisch sehr einfach gestaltet werden. Jedoch können in diesem Fall nur nicht magnetisierbare Gegenstände transportiert werden.

Vorteilhafterweise ist die erste Komponente ein Federstahlblech, welches als Gegenlage dient oder Bestandteil der Gegenlage ist. Dabei kann das Federstahlblech so angeordnet werden, dass die Gegenstände an ihm gleiten. Auf diese Weise kann eine Eigenschaft von Stahl, nämlich ein geringer Gleitreibungskoeffizient, in vorteilhafter Weise ausgenutzt werden.

Weiterhin ist es vorteilhaft, wenn die zweite Komponente ein an dem Mitnehmerelement angeordneter Magnet ist. Dies kann ein Permanentmagnet oder ein in irgendeiner Weise schaltbarer Magnet sein. Auf diese Weise wirkt die magnetische Kraft nur im Bereich des Mitnehmerelements.

In einer weiteren Ausführungsform umfasst das Mitnehmerelement eine Feder, die der magnetischen Kraft entgegen wirkt und größer als diese ist, wenn der Abstand der beiden Komponenten, zwischen welchen die magnetische Wechselwirkung auftritt, einen Minimalabstand überschreitet. Dieser Funktion der Feder geht die Überlegung voran, dass die magnetische Kraft zwischen Mitnehmerelement und Gegenlage mit kleiner werdendem Abstand größer wird, wobei näherungsweise eine quadratische Abhängigkeit gegeben ist. Bei einer gegebenen Feder wird bei einem bestimmten Abstand, der in der Sprache dieser Patentanmeldung als Minimalabstand bezeichnet wird, die Federkraft größer als die magnetische Anziehungskraft. In diesem Fall wird das Mitnehmerelement von der Gegenlage weggezogen. Bei einer derartigen Ausgestaltung der Erfindung ist das Mitnehmerelement ist also zwischen einer aktiven Stellung, in der der flache Gegenstand klemmend geführt wird, und einer passiven Stellung hin- und her schaltbar. Dieses Schalten kann durch mechanische Zwangskräfte, beispielsweise durch Steuerkurven, aber auch durch eine Erhöhung oder Erniedrigung der magnetischen Kraft erfolgen.

In bevorzugter Ausführungsform ist dieses Schalten für jedes Mitnehmerelement selektiv durchführbar. Dieses vermeidet, dass der Kopf des Mitnehmerelements bei Ausbleiben eines Gegenstand entlang der Gegenlage rutscht und so zu unerwünschtem Verschleiß führt.

Zwecks Schaltens kann aber auch ein Teil der Gegenlage in Richtung auf und von dem Fördermittel weg bewegbar sein. Bei Fehlen der Gegenlage wirkt auf das Mitnehmerelement keine magnetische Kraft, so dass dieses aufgrund der Federkraft wieder in seine Ausgangsgangsposition zurück geführt wird. Nur bei Anwesenheit eines flachen Gegenstandes wird die Gegenlage in Richtung auf das Fördermittel bewegt. Die Anwesenheit eines flachen Gegenstandes kann durch einen Sensor ermittelt werden, der ein entsprechendes Signal an ein Steuergerät weitergibt, welches die Bewegung des Teils der Gegenlage veranlasst.

Eine derartige, erfindungsgemäße Vorrichtung findet bevorzugt in einer Vorrichtung zur Herstellung von Gewebesäcken, deren Ausgangsprodukt ein rundgewebtes, schlauchförmiges Material ist, Verwendung.

Weitere Ausführungsbeispiele der Erfindung gehen aus der gegenständlichen Beschreibung, den Ansprüchen und der Zeichnung hervor.

Die einzelnen Figuren zeigen:
- Fig. 1: schematische Darstellung einer erfindungsgemäßen Transportvorrichtung
- Fig. 2: eine Darstellung eines Mitnehmerelements
- Fig. 3: Ansicht III-III gemäß Fig. 2
- Fig. 4: eine Ausführungsform des Einlaufbereiches einer erfindungsgemäßen Vorrichtung

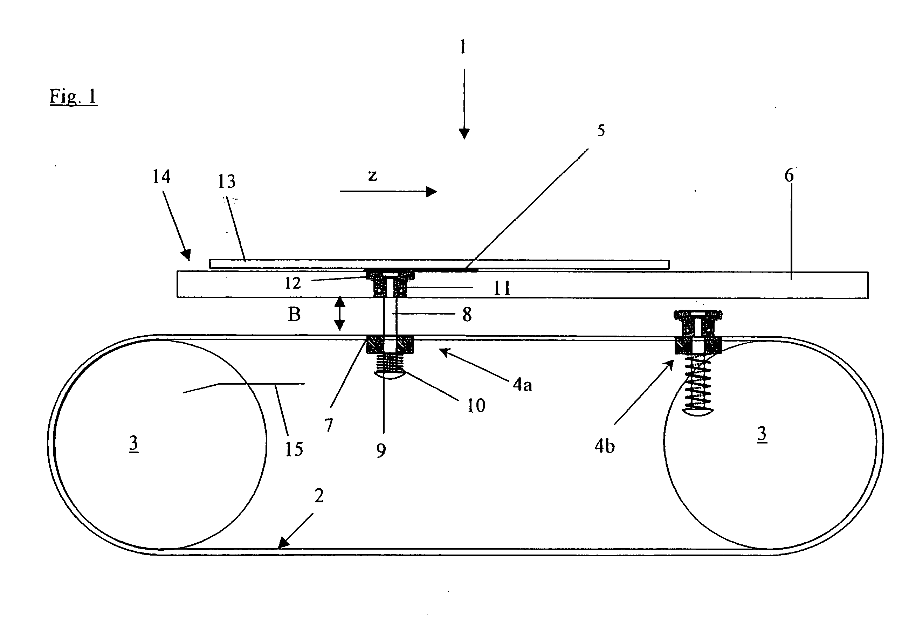

Fig. 1 zeigt eine schematische Darstellung einer Transportvorrichtung 1. Diese umfasst eine als Fördermittel dienende umlaufende, endlose Laschenkette 2, welche über Zahnräder 3, die im Maschinengestell gelagert sein können, angetrieben beziehungsweise umgelenkt wird. An der Laschenkette 2 sind seitlich zumindest zwei Mitnehmerelemente 4 angebracht. In der Regel ist in einer erfindungsgemäßen Transportvorrichtung eine Mehrzahl solcher Mitnehmerelemente 4 vorgesehen. In der Figur 1 sind zwei Mitnehmerelemente dargestellt, wobei das Mitnehmerelement 4a in einer ausgefahrenen, aktiven und das Mitnehmerelement 4b in einer eingefahrenen, passiven Position dargestellt ist.

Oberhalt der aus Laschenkette 2 und Zahnrädern 3 bestehenden Antriebsvorrichtung ist ein Tisch 6 angeordnet, dessen Oberfläche die Förderebene für die zu transportierenden flachen Gegenstände 5, beispielsweise schlauchförmige Kunststoffmaterialien, darstellt. Die flachen Gegenstände 5 werden dabei in Transportrichtung z gefördert.

Ein Mitnehmerelement 4a, 4b besteht aus einem Haltestück 7, in dem ein Bolzen 8 verschieblich gelagert ist. Die Verschiebung erfolgt in einer Richtung des Doppelpfeils B. Diese Richtung ist im wesentlichen orthogonal zur durch die Oberseite des Tisches 6 festgelegten Förderebene. Der das Haltestück 7 durchsetzende Bolzen 8 trägt an seinem Fußende eine Scheibe 9. Zwischen der Scheibe 9 und dem Haltestück 7 umgibt eine Druckfeder 10 den Bolzen 8, die in der Weise wirkt, dass das Mitnehmerelement 4a, 4b ohne einer anderen Krafteinwirkung in seiner eingezogenen, passiven Position verbleibt, wie es anhand des Mitnehmerelements 4b illustriert ist.

Das Mitnehmerelement 4a ist in seiner ausgefahrenen Position dargestellt. Damit das Mitnehmerelement 4a in dieser Position verbleibt, ist sein Kopf 11 mit einem Permanentmagneten 12 ausgestattet. Oberhalb eines in den Tisch 6 eingebrachten Schlitzes, durch welchen das Mitnehmerelement 4a hindurchreichen kann, ist eine Gegenlage 13 aus Federbandstahl befestigt. Reicht der Permanentmagnet 12 nahe genug an die Gegenlage 13 heran, so tritt der Permanentmagnet 12 mit dem Federbandstahl in Wechselwirkung, so dass der gesamte Kopf 11 und der Bolzen 8, gegen die Kraft der Feder 10, in Richtung auf die Gegenlage 13 bewegt wird, bis der flache Gegenstand 5 zwischen Kopf 11 und Gegenlage 13 eingeklemmt ist. Um einen derartig nahen Abstand zu erreichen, befindet sich unterhalb des Einlaufbereiches 14 der Gegenlage 13 eine Führung 15, die den Bolzen 8 gegen die Kraft der Druckfeder 10 anhebt.

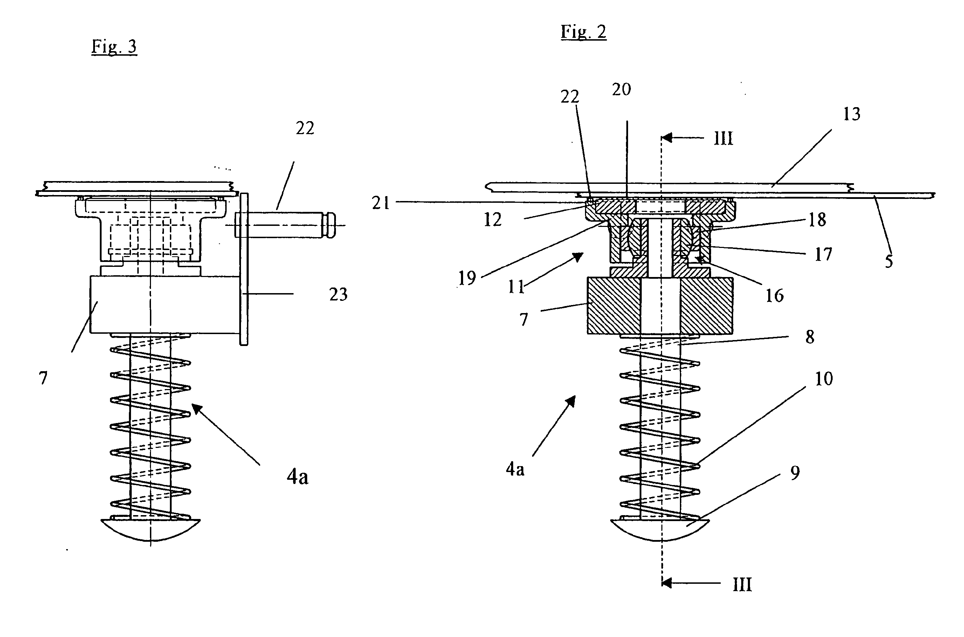

Die Figur 2 zeigt den Aufbau des Mitnehmerelements 4a, 4b in vergrößerter Darstellung, die das Mitnehmerelement 4b in seiner eingezogenen Position zeigt. Zu erkennen ist, dass der Kopf 11 eine Gelenkverbindung 16 umfasst, dessen innerer, konvex geformter Ring 17 am oberen Ende des Bolzen 8 befestigt ist. Der äußere Ring 18 der Gelenkverbindung 16 ist in eine Bohrung des Magnetträgers 19 eingesetzt. In einer obere Ausnehmung des Magnetträgers 19 ist der ring- oder scheibenförmige Permanentmagnet 12 auf nicht näher gezeigte Art befestigt. Durch die Gelenkverbindung 16 ist sichergestellt, dass die der Gegenlage 13 zugewandte Oberfläche des Permanentmagneten 12 immer planparallel zu der Gegenlage 13 verläuft. Dies ist wichtig, da der Bolzen 8 des Mitnehmerelementes 4a, 4b aufgrund der Verwendung eines flexiblen Zugorgans nicht in allen Betriebssituationen, beispielsweise bei einer beschleunigten Bewegung im Taktbetrieb mit hoher Taktfrequenz, orthogonal zur Gegenlage 13 steht.

Auf der der Gegenlage 13 zugewandten Oberfläche des Permanentmagneten 12 ist ein kompressibler Belag 20 aufgeklebt, der eine hohe Haftreibung bei Kontakt mit einem flachen Gegenstand 5 verursacht, so dass die zu transportierenden flachen Gegenstände 5 sich relativ zum Mitnehmerelement 4a in Ruhe befinden. Dies ist vor allem bei beschleunigten Bewegungen im Taktbetrieb einer erfindungsgemäßen Vorrichtung wichtig. Der kompressible Belag 20 kann dabei aus einem Silikonkautschuk oder ähnlichem Material bestehen.

Um den kompressiblen Belag 20 vor Abrieb zu schützen, ist der obere Rand 21 des Magnetträgers 19 mit nadelförmigen, aber stumpfen Abstandhalten 22 belegt, die den kompressiblen Belag 20 knapp überragen. Die stumpfen Abstandhalter 22 drücken sich jedoch zusätzlich ein wenig in das Material des flachen Gegenstandes 5 hinein, so dass letzterer auf diese Weise noch zusätzlich gehalten wird.

Die Fig. 3 zeigt die Ansicht III - III gemäß Fig. 2, aus der zu erkennen ist, wie das Mitnehmerelement 4 an einer Laschenkette 2 bevorzugt befestigt wird. Seitlich an das das Mitnehmerelement 4a, b tragende Haltestück 7 ist eine Halteplatte 23 angeordnet. An dieser Halteplatte 23 sind orthogonal zu dieser jeweils zwei Kettennieten 24 befestigt. Diese Kettennieten 24 dienen also zugleich der Verbindung zweier Kettenlaschen als auch dem Tragen des Mitnehmerelementes 4a, b.

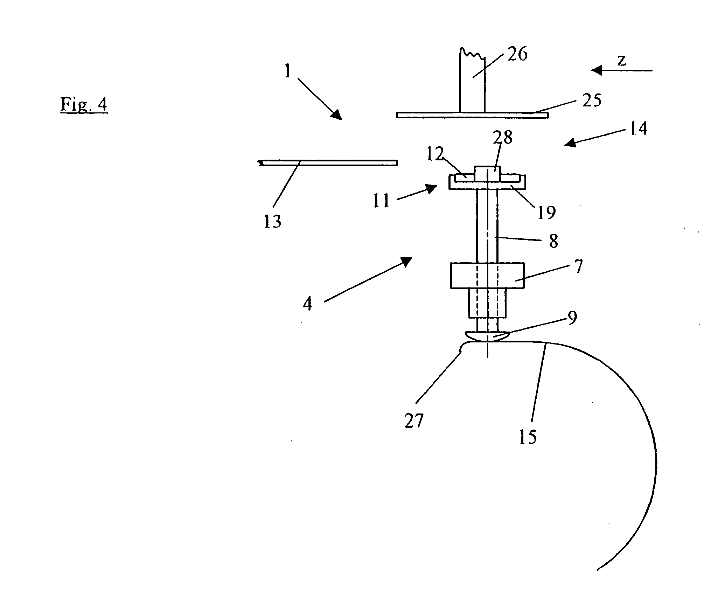

Die Fig. 4 zeigt den einlaufseitigen Ausschnitt einer weiteren Ausführungsform einer erfindungsgemäßen Vorrichtung da. Gegenüber den Figuren 1 bis 3 wurd die Transportrichtung z der hier nicht dargestellten flachen Gegenstände umgekehrt. Alle für das Verständnis der Funktionsweise des Einlaufes der Gegenstände nicht notwendigen Bestandteile wurden in der Fig. 4 nicht dargestellt.

Wie bereits beschrieben wirkt auf die Scheibe 9 aufgrund der Führung 15 eine Kraft, die ein Anheben des Bolzens 8 zur Folge hat. Befindet sich nun oberhalb des Mitnehmerelements 4 ein zu transportierender Gegenstand, so wird die Platte 25 abgesenkt. Dazu ist die Platte 25 über einen Kolben 26 mit einem beliebigen Hubmechanismus verbunden. Dies kann eine einfache Kolbenzylindereinheit sein, aber auch ein beliebiger anderer Aktuator. Erst nach dem Absenkvorgang können sich zwischen der Platte 25 und dem Magneten 12 Kräfte ausbilden, aufgrund welcher das Mitnehmerelement 4 und die Platte 25 den flachen Gegenstand klemmend halten können. Solange sich der Kopf 11 des Mitnehmerelements 4 noch nicht im Bereich der Gegenlage 13 befindet, bleibt die Platte 25 abgesenkt. Erst danach wird sie 25 wieder in ihre Ausgangsposition zurückgefahren.

Bei Ausbleiben eines flachen Gegenstandes, was über einen beliebigen Sensor erfasst werden kann, verbleibt die Platte 25 in ihrer Ausgangsposition. Da sich nun nur sehr schwache magnetische Kräfte zwischen Magnet 12 und Platte 25 ausbilden, fällt der Bolzen 8 nach Überstreichen des Endbereiches 27 der Führung 15 in seine Ausgangsposition zurück. Der Abstand zwischen Magnet 12 und Gegenlage 13 ist nun zu groß, so dass sich das Mitnehmerelement 4 nicht in Richtung auf die Gegenlage bewegt.

Insgesamt wird auf die beschriebene Weise eine selektive Aktivierung einzelner Mitnehmerelemente in Abhängigkeit von der Anwesenheit eines flachen Gegenstandes erzielt.

Der in der Fig. 4 gezeigte Aufbau des Kopfes 11 unterscheidet sich von demjenigen, wie er in den Fig. 2 und 3 dargestellt ist. In Fig. 4 ist der Magnet 12 ringförmig ausgebildet. In dem mittigen Loch ist ein kompressibles Elemente 28 eingelassen, das eine Zylinderform aufweist. Als kompressibles Element 28 kann hier beispielsweise ein Gummiblock verwendet werden. Durch die Verwendung eines Materials wie Gummi liegt dessen dem flachen Gegenstand zugewandte Oberseite immer mit der ganzen Fläche an dem flachen Gegenstand an, auch wenn der Bolzen 8 eine leichte Schräglage einnimmt. Daher könnte in diesem Ausführungsbeispiel auf eine die Gelenkverbindung 16 verzichtet werden.

| **Bezugszeichen liste** | |
|---|---|
| 1 | Transportvorrichtung |
| 2 | Laschenkette |
| 3 | Zahnräder |
| 4, 4a, 4b | Mitnehmerelemente |
| 5 | flacher Gegenstand |
| 6 | Tisch |
| 7 | Haltestück |
| 8 | Bolzen |
| 9 | Scheibe |
| 10 | Druckfeder |
| 11 | Kopf |
| 12 | Permanentmagnet |
| 13 | Gegenlage |
| 14 | Einlaufbereich |
| 15 | Führung |
| 16 | Gelenkverbindung |
| 17 | innerer Ring der Gelenkverbindung |
| 18 | äußerer Ring der Gelenkverbindung |
| 19 | Magnetträger |
| 20 | kompressibler Belag |
| 21 | oberer Rand |
| 22 | Abstandhalter |
| 23 | Halteplatte |
| 24 | Kettenniete |
| 25 | Andrückplatte |
| 26 | Kolben |
| 27 | Endbereich der Führung |
| 28 | kompressibles Element |
| B | Bewegungsrichtung des Bolzens 8 |
| z | Transportrichtung des flachen Gegenstandes 5 |

## Patentansprüche

1. Vorrichtung (1) zum Transport von flachen Gegenständen (5), vorzugsweise von Schlauchstücken oder Säcken,
welche zumindest ein Fördermittel (2) umfasst, das die flachen Gegenstände (5) in einer Transportrichtung (z) fördert, und
- welche zumindest eine Gegenlage (13) zu dem Fördermittel (2) aufweist,
- wobei das zumindest eine Fördermittel (2) und seine zumindest eine Gegenlage (13) derart angeordnet sind, dass zwischen dem Fördermittel (2) und seiner Gegenlage (13) eine Klemmkraft wirkt, welche die flachen Gegenstände (5) zumindest während eines Teiles ihres Transportes in der Vorrichtung (1) in Wirkverbindung mit dem zumindest einen Fördermittel (2) hält,
- wobei das zumindest eine Fördermittel (2) zumindest zwei in Transportrichtung (z) bewegliche und in Transportrichtung (z) gegeneinander versetzte Mitnehmerelemente (4) zum Vermitteln zumindest eines Teils der Klemmkraft auf die flachen Gegenstände (5) aufweist, **dadurch gekennzeichnet,**
**dass** zumindest Bestandteile (8,11) eines jeden Mitnehmerelements (4) zum Vermitteln der Klemmkraft auf die Gegenlage (13), relativ zum Fördermittel (2) in einer Richtung (B) im wesentlichen orthogonal zur Fördevebene verschieblich gelagert sind und dass die flachen Gegenstände durch die Bewegung der Bestandteile (8,11) der zumindest zwei Mitnehmerelementen (4) zwischen der Gegenlage (13) und der zumindest zwei Mitnehmerelementen (4) klemmbar sind.

2. Vorrichtung (1) nach vorstehendem Anspruch,
**dadurch gekennzeichnet, dass**
das zumindest eine Fördermittel (2) zumindest ein umlaufendes, endloses Transportmittel wie ein Band, eine Kette oder ein Rad umfasst.

3. Vorrichtung nach einem der vorstehenden Ansprüche,
**dadurch gekennzeichnet, dass**
das zumindest eine Fördermittel (2) zumindest zwei Haltestücke (7) aufweist, in welchen (7) zumindest Bestandteile (8, 11) der Mitnehmerelemente (4) verschieblich gelagert sind.

4. Vorrichtung nach einem der vorstehenden Ansprüche,
**dadurch gekennzeichnet, dass**
die Oberfläche des Mitnehmerelements (4), mit welchem eine Wirkverbindung der flachen Gegenstände (5) zu dem zumindest einem Fördermittel (2) herstellbar ist, einen höheren Haftreibungskoeffizienten aufweist als die Gegenlage.

5. Vorrichtung nach einem der vorstehenden Ansprüche,
**dadurch gekennzeichnet, dass**
die Oberfläche des Mitnehmerelements (4), mit welchem eine Wirkverbindung der flachen Gegenstände (5) zu dem zumindest einem Fördermittel (2) herstellbar ist, ein kompressibles Material (20, 28) umfasst.

6. Vorrichtung nach vorstehendem Anspruch,
**dadurch gekennzeichnet, dass**
das kompressible Material (20, 28) von Abstandhaltern (22) umgeben ist, welche das kompressible Material (20, 28) in Richtung auf die Gegenlage (13) überragen.

7. Vorrichtung nach einem der vorstehenden Ansprüche,
**dadurch gekennzeichnet, dass**
federnde Elemente zumindest ein Teil der Klemmkräfte, die die Mitnehmerelemente (4) den flachen Gegenständen (5) vermitteln, aufbringen.

8. Vorrichtung nach einem der vorstehenden Ansprüche,
**dadurch gekennzeichnet, dass**
zumindest ein Teil der Klemmkräfte, die die Mitnehmerelemente (4) den flachen Gegenständen (5) vermitteln, von einem der folgenden Elemente aufbringbar ist:
- Druckluftzylinder
- Druckfeder
- Zugfeder.

9. Vorrichtung nach einem der vorstehenden Ansprüche,
**dadurch gekennzeichnet, dass**
zwei sich aufgrund einer magnetischen Wechselwirkung anziehenden oder abstoßenden Komponenten (12, 13) Kräfte aufbringen, die zumindest einen Teil der Klemmkräfte ausmachen, die die Mitnehmerelemente (4) den flachen Gegenständen vermitteln.

10. Vorrichtung nach vorstehendem Anspruch,
**dadurch gekennzeichnet, dass**
die erste Komponente in oder an der Gegenlage (13) und/oder die zweite Komponente in oder an dem Mitnehmerelement (4) angeordnet ist.

11. Vorrichtung nach dem vorstehenden Anspruch,
**dadurch gekennzeichnet, dass**
die Gegenlage (13) als erste Komponente ein Federstahlblech umfasst.

12. Vorrichtung nach einem der beiden vorstehenden Ansprüchen,
**dadurch gekennzeichnet, dass**
die zweite Komponente ein dem Mitnehmerelement (4) zugeordneter Magnet (12) ist.

13. Vorrichtung nach vorstehendem Anspruch,
**dadurch gekennzeichnet, dass**
der Magnet (12) einen größeren Abstand zur Gegenlage (13) als der kompressible Belag einnimmt.

14. Vorrichtung nach einem der fünf vorstehenden Ansprüchen,
**dadurch gekennzeichnet, dass**
das Mitnehmerelement (4) eine Feder (10) umfasst, die der magnetischen Kraft entgegen wirkt und größer als diese ist, wenn der Abstand der beiden Komponenten (12, 13), zwischen welchen eine magnetische Wechselwirkung auftritt, einem Minimalabstand überschreitet.

15. Vorrichtung nach dem vorstehenden Anspruch,
**dadurch gekennzeichnet, dass**
der Minimalabstand 2 Zentimeter beträgt.

16. Vorrichtung nach einem der vorstehenden Ansprüche,
**dadurch gekennzeichnet, dass**
die zwischen einem Mitnehmerelement (4) und der Gegenlage (13) auftretende Klemmkraft selektiv aktivierbar ist.

17. Vorrichtung nach einem der Ansprüche 9 bis 15,
**dadurch gekennzeichnet, dass**
der Abstand zumindest von Teilen (25) der Gegenlage (13) zu dem Fördermittel (2) veränderbar ist.

18. Vorrichtung nach vorstehendem Anspruch,
**dadurch gekennzeichnet, dass**
der Abstand zumindest von Teilen (25) der Gegenlage (13) zum Fördermittel (2) zumindest in Abwesenheit von Teilen von flachen Gegenständen größer als der Abstand der Gegenlage (13) zum Fördermittel (2) ist.

19. Vorrichtung nach einem der beiden vorstehenden Ansprüche,
**dadurch gekennzeichnet, dass**
der Abstand von Teilen (25) der Gegenlage (13) dem Abstand zwischen der Gegenlage (13) zum Fördermittel (2) angleichbar ist, wenn ein flacher Gegenstand (5) zumindest Teile des kompressiblen Belags (20) oder des kompressiblen Elements (28) des Mitnehmerelements (4) überdeckt.

20. Vorrichtung nach einem der drei vorstehenden Ansprüche,
**dadurch gekennzeichnet, dass**
die Teile (25) der Gegenlage (13) im Einlaufbereich (14) der flachen Gegenstände (5) zwischen die Gegenlage um dem Fördermittel (2, 4) angeordnet sind.

21. Verfahren (1) zum Transport von flachen Gegenständen (5), vorzugsweise von Schlauchstücken oder Säcken,
- bei welchem zumindest ein Fördermittel (2) die flachen Gegenstände (5) in einer Transportrichtung (z) fördert,
- bei welchem zumindest eine Gegenlage (13) zu dem Fördermittel (2) verwendet wird,
- bei welchem auf die flachen Gegenstände eine Klemmkraft wirkt wenn diese zwischen dem zumindest einen Fördermittel (2) und seiner zumindest eine Gegenlage (13) transportiert werden,
- wobei diese Klemmkraft die flachen Gegenstände (5) zumindest während eines Teiles ihres Transportes in der Vorrichtung (1) in Wirkverbindung mit dem zumindest einen Fördermittel (2) hält,
- und wobei das zumindest eine Fördermittel (2) zumindest zwei in Transportrichtung (z) bewegliche und in Transportrichtung (z) gegeneinander versetzte Mitnehmerelemente (4) zum Vermitteln zumindest eines Teils der Klemmkraft auf die flachen Gegenstände (5) verwendet.
**dadurch gekennzelchnet,**
**dass** zumindest Bestandteile (8,11) eines jeden Mitnehmerelements (4), zum Vermitteln der Klemmkraft auf die Gegenlage (13), relativ zum Fördermittel (2) in einer Richtung (B) im wesentlichen orthogonal zur Fördevebene verschoben werden
und dass die flachen Gegenstände durch die Bewegung der Bestandteile (8,11) der zumindest zwei Mitnehmerelementen (4) zwischen der Gegenlage und der zumindest zwei Mitnehmerelemen (4) eingeklemmt werden.

## Claims

1. Apparatus (1) for transporting flat articles (5), preferably flexible-tube portions or bags
- which comprises at least one conveying means (2), which conveys the flat articles (5) in a transporting direction (z), and
- which has at least one abutment (13) in relation to the conveying means (2),
- wherein the at least one conveying means (2) and its at least one abutment (13) are arranged such that a clamping force acts between the conveying means (2) and its abutment (13) to retain the flat articles (5) in operative connection with the at least one conveying means (2) at least during part of their transportation in the apparatus (1),
- wherein the at least one conveying means (2) has at least two driver elements (4) which can be moved in the transporting direction (z), are offset in relation to one another in the transporting direction (z) and are intended for imparting at least some of the clamping force to the flat articles (5),
**characterized**
**in that** at least constituent parts (8, 11) of each driver element (4), for imparting the clamping force to the abutment (13), are mounted such that they can be displaced relative to the conveying means (2) in a direction (B) essentially orthogonal to the conveying plane, and in that the flat articles can be clamped between the abutment (13) and the at least two driver elements (4) by the movement of the constituent parts (8, 11) of the at least two driver elements (4).

2. Apparatus (1) according to the preceding claim, **characterized in that**
the at least one conveying means (2) comprises at least one circulating, endless transporting means such as a belt, a chain or a wheel.

3. Apparatus according to one of the preceding claims,
**characterized in that**
the at least one conveying means (2) has at least two retaining pieces (7), in which (7) at least constituent parts (8, 11) of the driver elements (4) are mounted in a displaceable manner.

4. Apparatus according to one of the preceding claims,
**characterized in that**
the surface of the driver element (4) which can create an operative connection between the flat articles (5) and the at least one conveying means (2) has a higher coefficient of static friction that the abutment.

5. Apparatus according to one of the preceding claims,
**characterized in that**
the surface of the driver element (4) which can create an operative connection between the flat articles (5) and the at least one conveying means (2) comprises a compressible material (20, 28).

6. Apparatus according to the preceding claim,
**characterized in that**
the compressible material (20, 28) is encompassed by spacers (22) which project beyond the compressible material (20, 28) in the direction of the abutment (13).

7. Apparatus according to one of the preceding claims,
**characterized in that**
resilient elements apply at least some of the clamping forces which the driver elements (4) impart to the flat articles (5).

8. Apparatus according to one of the preceding claims,
**characterized in that**
at least some of the clamping forces which the driver elements (4) impart to the flat articles (5) can be applied by one of the following elements:
- compressed-air cylinder
- compression spring
- tension spring.

9. Apparatus according to one of the preceding claims,
**characterized in that**
two components (12, 13) which, on account of magnetic interaction, have an attracting or repelling action apply forces which make up at least some of the clamping forces which the driver elements (4) impart to the flat articles.

10. Apparatus according to the preceding claim,
**characterized in that**
the first component is arranged in or on the abutment (13) and/or the second component is arranged in or on the driver element (4).

11. Apparatus according to the preceding claim,
**characterized in that**
the abutment (13) comprises, as its first component, a spring-steel sheet.

12. Apparatus according to either of the two preceding claims,
**characterized in that**
the second component is a magnet (12) assigned to the driver element (4).

13. Apparatus according to the preceding claim,
**characterized in that**
the magnet (12) is spaced apart from the abutment (13) to a greater extent than the compressible covering.

14. Apparatus according to one of the five preceding claims,
**characterized in that**
the driver element (4) comprises a spring (10) which counteracts the magnetic force and applies a greater force than the latter when the spacing between the two components (12, 13), between which there is magnetic interaction, exceeds a minimum spacing.

15. Apparatus according to the preceding claim,
**characterized in that**
the minimum spacing is 2 centimetres.

16. Apparatus according to one of the preceding claims,
**characterized in that**
the clamping force occurring between a driver element (4) and the abutment (13) can be activated in a selective manner.

17. Apparatus according to one of Claims 9 to 15,
**characterized in that**
it is possible to alter the spacing between at least parts (25) of the abutment (13) and the conveying means (2).

18. Apparatus according to the preceding claim,
**characterized in that**
the spacing between at least parts (25) of the abutment (13) and the conveying means (2), at least in the absence of parts of flat articles, is greater than the spacing between the abutment (13) and the conveying means (2).

19. Apparatus according to either of the two preceding claims,
**characterized in that**
the spacing between parts (25) of the abutment (13) can be brought into line with the spacing between the abutment (13) and the conveying means (2) when a flat article (5) covers over at least parts of the compressible covering. (20) or of the compressible element (28) of the driver element (4).

20. Apparatus according to one of the three preceding claims,
**characterized in that**
the parts (25) of the abutment (13) are arranged in the entry region (14) of the flat articles (5) between the abutment and the conveying means (2, 4).

21. Method of transporting flat articles (5), preferably flexible-tube portions or bags,
- in which at least one conveying means (2) conveys the flat articles (5) in a transporting direction (z),
- in which use is made of at least one abutment (13) in relation to the conveying means (2),
- in which a clamping force acts on the flat articles when the latter are being transported between the at least one conveying means (2) and its at least one abutment (13),
- wherein this clamping force retains the flat articles (5) in operative connection with the at least one conveying means (2) at least during part of their transportation in the apparatus (1),
- and wherein the at least one conveying means (2) uses at least two driver elements (4) which can be moved in the transporting direction (z), are offset in relation to one another in the transporting direction (z) and are intended for imparting at least some of the clamping force to the flat articles (5),
**characterized**
**in that** at least constituent parts (8, 11) of each driver element (4), for imparting the clamping force to the abutment (13), are displaced relative to the conveying means (2) in a direction (B) essentially orthogonal to the conveying plane,
and **in that** the flat articles are clamped in between the abutment and the at least two driver elements (4) by the movement of the constituent parts (8, 11) of the at least two driver elements (4).

## Revendications

1. Dispositif (1) pour le transport d'objets plats (5), de préférence de tronçons tubulaires ou de sacs,
- qui comprend au moins un moyen de convoyage (2) qui convoie les objets plats (5) dans une direction de transport (z), et
- qui présente au moins une contre-couche (13) au moyen de convoyage (2),
- où le au moins un moyen de convoyage (2) et sa au moins une contre-couche (13) sont disposés de telle sorte qu'il agit entre le moyen de convoyage (2) et sa contre-couche (13) une force de serrage qui maintient les objets plats (5) au moins pendant une partie de leur transport dans le dispositif (1) en liaison active avec le au moins un moyen de convoyage (2),
- où le au moins un moyen de convoyage (2) présente au moins deux éléments d'entraînement (4) déplaçables dans la direction de transport z et décalés dans la direction de transport z l'un par rapport à l'autre pour transférer au moins une partie de la force de serrage aux objets plats (5),
**caractérisé en ce qu'**au moins des composants (8, 11) de chaque élément d'entraînement (4), pour transférer la force de serrage à la contre-couche (13), sont logés d'une manière déplaçable relativement au moyen de convoyage (2) dans une direction (B) sensiblement orthogonale au plan de convoyage,
et **en ce que** les objets plats, par suite du déplacement des composants (8, 11) des au moins deux éléments d'entraînement (4) peuvent être serrés entre la contre-couche (13) et les au moins deux éléments d'entraînement (4).

2. Dispositif (1) selon la revendication précédente, **caractérisé en ce que** le au moins un moyen de convoyage (2) comprend au moins un moyen de transport sans fin s'étendant tout autour comme une bande, une chaîne ou une roue.

3. Dispositif selon l'une des revendications précédentes, **caractérisé en ce que** le au moins un moyen de convoyage (2) présente au moins deux pièces de retenue (7) dans lesquelles (7) sont logés d'une manière déplaçable au moins les composants (8, 11) des éléments d'entraînement (4).

4. Dispositif selon l'une des revendications précédentes, **caractérisé en ce que** la surface de l'élément d'entraînement (4) au moyen duquel peut être établie une liaison active des objets plats (5) à au moins un moyen de convoyage précité (2), présente un coefficient de frottement par adhérence plus élevé que la contre-couche.

5. Dispositif selon l'une des revendications précédentes, **caractérisé en ce que** la surface de l'élément d'entraînement (4), avec laquelle peut être établie une liaison active des objets plats (5) à au moins un moyen de convoyage précité (2), comprend un matériau compressible (20, 28).

6. Dispositif selon la revendication précédente, **caractérisé en ce que** le matériau compressible (20, 28) est entouré par des pièces d'écartement (22) qui font saillie sur le matériau compressible (20, 28) en direction de la contre-couche (13).

7. Dispositif selon l'une des revendications précédentes, **caractérisé en ce que** les éléments élastiques produisent au moins une partie des forces de serrage que les éléments d'entraînement (4) transfèrent aux objets plats (5).

8. Dispositif selon l'une des revendications précédentes, **caractérisé en ce qu'**au moins une partie des forces de serrage, que les éléments d'entraînement (4) transfèrent aux objets plats (5), peut être produite par un des éléments suivants:
. vérin d'air comprimé
. ressort de pression
. ressort de traction.

9. Dispositif selon l'une des revendications précédentes, **caractérisé en ce que** deux composants (12, 13) s'attirant ou se repoussant en raison d'un effet d'interaction magnétique produisent des forces qui représentent au moins une partie des forces de serrage que les éléments d'entraînement (4) transfèrent aux objets plats.

10. Dispositif selon la revendication précédente, **caractérisé en ce que** le premier composant est disposé dans ou à la contre-couche (13) et/ou le deuxième composant dans ou à l'élément d'entraînement (4).

11. Dispositif selon la revendication précédente, **caractérisé en ce que** la contre-couche (13), comme premier composant, comprend une tôle d'acier à ressort.

12. Dispositif selon l'une des deux revendications précédentes, **caractérisé en ce que** le deuxième composant est un aimant (12) associé à l'élément d'entraînement (4).

13. Dispositif selon la revendication précédente, **caractérisé en ce que** l'aimant (12) se trouve à une distance plus grande de la contre-couche (13) que le revêtement compressible.

14. Dispositif selon l'une des cinq revendications précédentes, **caractérisé en ce que** l'élément d'entraînement (4) comprend un ressort (10) qui s'oppose à la force magnétique et qui est plus grand que celui-ci lorsque l'écart entre les deux composants (12, 13), entre lesquels se produit une interaction magnétique, dépasse un écart minimal.

15. Dispositif selon la revendication précédente, **caractérisé en ce que** l'écart minimal est de 2 centimètres.

16. Dispositif selon l'une des revendications précédentes, **caractérisé en ce que** la force de serrage produite entre un élément d'entraînement (4) et la contre-couche (13) est activable sélectivement.

17. Dispositif selon l'une des revendications 9 à 15, **caractérisé en ce que** l'écart au moins de parties (25) de la contre-couche (13) au moyen de convoyage (2) est modifiable.

18. Dispositif selon la revendication précédente, **caractérisé en ce que** l'écart au moins de parties (25) de la contre-couche (13) au moyen de convoyage (2), au moins en l'absence de parties d'objets plats, est plus grand que l'écart de la contre-couche (13) au moyen de convoyage (2).

19. Dispositif selon l'une des deux revendications précédentes, **caractérisé en ce que** l'écart de parties (25) de la contre-couche (13) peut être adapté à l'écart entre la contre-couche (13) et le moyen de convoyage (2) lorsqu'un objet plat (5) recouvre au moins des parties du revêtement compressible (20) ou de l'élément compressible (28) de l'élément d'entraînement (4).

20. Dispositif selon l'une des trois revendications précédentes, **caractérisé en ce que** les parties (25) de la contre-couche (13) sont disposées dans la zone d'entrée (14) des objets plats (5) entre la contre-couche et le moyen de convoyage (2, 4).

21. Procédé (1) pour le transport d'objets plats (5), de préférence de tronçons tubulaires ou de sacs,
. dans lequel au moins un moyen de convoyage (2) transporte les objets plats (5) dans une direction de transport (z),
. dans lequel au moins une contre-couche (13) au moyen de transport (2) est utilisée,
. dans lequel agit sur les objets plats une force de serrage lorsque ceux-ci sont transportés entre le au moins un moyen de convoyage (2) et sa au moins une contre-couche (13),
. où cette force de serrage maintient les objets plats (5) au moins pendant une partie de leur transport dans le dispositif (1) en liaison active avec le au moins un moyen de convoyage (2),
. et où le au moins un moyen de convoyage (2) utilise au moins deux éléments d'entraînement (4) déplaçables dans la direction de transport (z) et décalés dans la direction de transport (z) l'un par rapport à l'autre pour transmettre au moins une partie de la force de serrage aux objets plats (5),
**caractérisé en ce qu'**au moins des composants (8, 11) de chaque élément d'entraînement (4), pour transférer la force de serrage à la contre-couche (13), sont déplacés relativement au moyen de convoyage (2) dans une direction (B) sensiblement orthogonale au plan du convoyage,
et **en ce que** les objets plats, par le déplacement des composants (8, 11) des au moins deux éléments d'entraînement (4), sont serrés entre la contre-couche et les au moins deux éléments d'entraînement (4).
